# FASCICULE DE BREVET EUROPEEN

(11) **EP 3 353 051 B1**
(45) Date de publication et mention de la délivrance du brevet: **09.01.2019**
(21) Numéro de dépôt: 17809303.5
(22) Date de dépôt: 06.12.2017
(51) Int. Cl.: B64C 1/18

(54) **PLANCHER DE CABINE POUR AERONEF ET PROCEDE DE MONTAGE D'UN TEL PLANCHER**
KABINENBODEN FÜR FLUGZEUGE UND VERFAHREN ZUM EINBAU SOLCH EINES BODENS
CABIN FLOOR FOR AIRCRAFT AND METHOD FOR INSTALLING SUCH A FLOOR

(30) Priorité: 09.12.2016 FR 1662267
(43) Date de publication de la demande: 01.08.2018
(73) Titulaire: Stelia Aerospace, 17300 Rochefort (FR)
(72) Inventeur: FAURE, Jérôme, 31770 Colomiers (FR); SEGUY, Jérôme, 31840 Aussonne (FR)
(74) Mandataire: Argyma
(86) Numéro de dépôt international: PCT/EP2017/081735
(87) Numéro de publication internationale: WO 2018/104403

(56) Documents cités:
- CN-U- 204 297 054
- FR-A1- 2 930 521
- FR-A1- 3 000 031

## Description

### DOMAINE TECHNIQUE GENERAL ET ART ANTERIEUR

La présente invention concerne le domaine des aéronefs et plus précisément le domaine des planchers de cabine d'un avion.

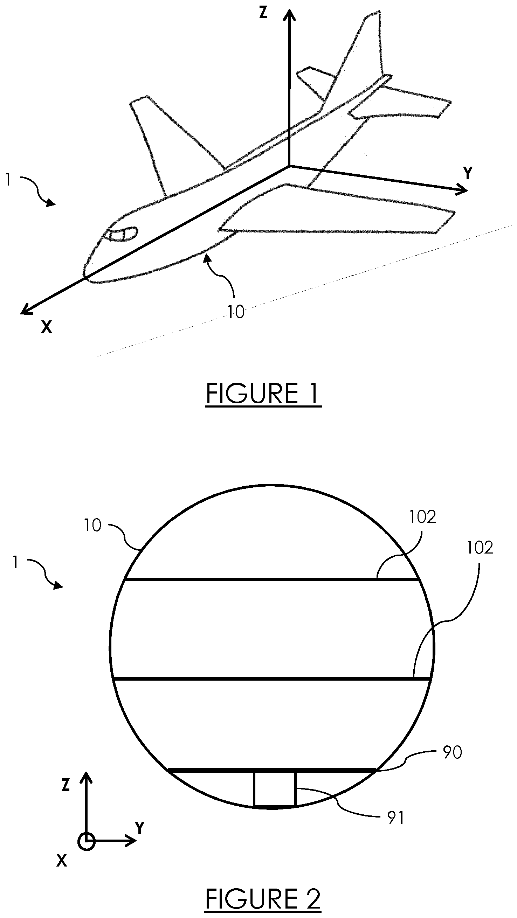

En référence à la figure 1, un avion 1 s'étend longitudinalement selon un axe X, latéralement selon un axe Y et verticalement selon un axe Z de manière à former un repère orthogonal (X, Y, Z). Ainsi par le terme horizontal, on entend un objet s'étendant dans le plan (X, Y). De manière similaire, le terme vertical désigne un objet s'étendant dans le plan (X, Z) et le terme transversal, un objet s'étendant dans le plan (Y, Z).

De manière connue, en référence à la figure 2, un avion 1 comprend un corps principal, désigné fuselage 10, délimitant l'habitacle de l'avion 1, dans lequel sont montés des planchers, typiquement un plancher de soute 90 et un ou deux plancher(s) de cabine 102. Un plancher de soute 90 est adapté pour être positionné dans la partie inférieure du fuselage 10. Un tel plancher de soute 90, permet notamment le stockage des bagages. A cet effet, le plancher de soute 90 comprend un renfort vertical 91 permettant un support sur la partie inférieure du fuselage 10. Un plancher de cabine 102 est, pour sa part, généralement positionné à une hauteur médiane du fuselage 10 et permet de recevoir du mobilier, par exemple, des sièges de passagers. De manière connue, un plancher de cabine 102 comprend une pluralité de poutres longitudinales (non représentées), s'étendant selon l'axe X, et une pluralité de poutres latérales (non représentées) s'étendant selon l'axe Y.

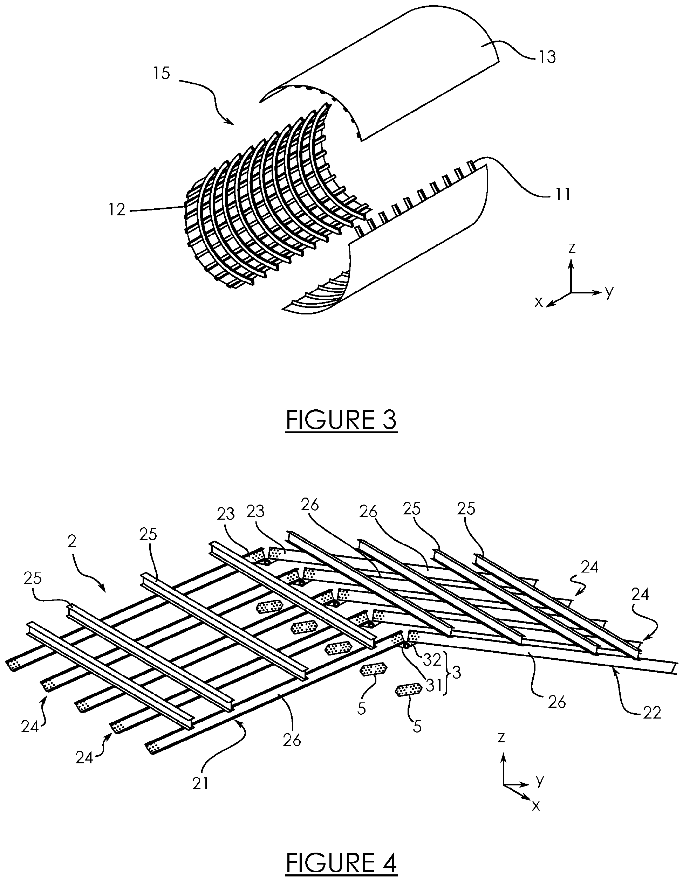

De manière connue, le fuselage 10 s'étend selon l'axe X et possède une section de forme circulaire ou elliptique. Le fuselage 10 est divisé en une pluralité de tronçons, comme par exemple la pointe avant ou le tronçon central, dans lequel se trouvent les passagers. En référence à la figure 3, un tronçon 15 de fuselage 10 peut être soit formé d'une pluralité de portions, soit formé d'un seul bloc. De manière connue, afin de réduire les temps de montage sur la ligne d'assemblage de l'avion, il est utilisé un tronçon 15 monobloc, désigné « Full Barrel », signifiant « tronçon périphérique fermé » en langue anglaise.

De manière classique, toujours en référence à la figure 3, un tronçon 15 de fuselage 10 comprend un assemblage de barres courbes s'étendant dans le plan (Y, Z), désignées cadres 11, et de barres longitudinales s'étendant selon l'axe X, désignées lisses 12, les cadres 11 et les lisses 12 étant recouverts d'une pluralité de panneaux 13.

Pour monter un plancher de cabine dans un avion, il est connu d'introduire individuellement chaque poutre longitudinale et chaque poutre latérale dans le tronçon de fuselage 15 puis de les solidariser ensemble dans le plan horizontal (X, Y) de l'avion de manière à obtenir un plancher de cabine horizontal 102. Un tel procédé de montage, long et fastidieux, est également source d'erreurs et d'endommagements du fait de la complexité et de la multiplicité des manipulations. Un tel procédé de montage est enfin très onéreux du fait de la main d'oeuvre nécessaire.

Afin de permettre un gain de temps, il a été proposé de préassembler les poutres du plancher de cabine. Un tel pré-assemblage, avantageusement réalisé sur un site dédié, permet, d'une part, de réduire le temps d'assemblage sur la ligne de montage avion et, d'autre part, de limiter les erreurs liées au montage. De plus le pré-assemblage sur un site dédié permet d'améliorer la logistique. La durée et le coût de montage du plancher de cabine sont ainsi fortement réduits.

En pratique, le montage d'un plancher de cabine préassemblé n'est mis en oeuvre que dans le cas d'un tronçon de fuselage comprenant une pluralité de portions. Dans le cas d'un tronçon de fuselage monobloc, un plancher de cabine préassemblé est difficile et complexe à monter du fait des contraintes géométriques liées au tronçon. Il est en effet complexe d'introduire un plancher de cabine préassemblé en entier dans un tronçon de fuselage dont la périphérie est fermée.

L'invention a donc pour but de remédier à ces inconvénients en proposant un plancher de cabine d'avion qui soit rapide et facile à monter, en particulier dans un tronçon périphérique fermé.

De manière incidente, on connaît par le document FR3000031A1 un module préassemblé de soute avionique prêt à être monté dans un avion. Un tel module de soute comprend un renfort vertical et un plancher de soute et se présente sous la forme d'une structure préassemblée destinée à être installée en une seule opération dans un tronçon de fuselage. Un tel plancher de soute comprend deux parties latérales pliantes permettant d'introduire le module de soute avionique dans le tronçon de fuselage en une seule opération. L'enseignement du document FR3000031A1 n'est pas transposable à un plancher de cabine. En effet, la présence du renfort vertical impose des contraintes d'encombrement sous le plancher, ce qui est incompatible avec un plancher de cabine. En effet, dans le cas d'un plancher de cabine, il est important de conserver un espace de soute sous le plancher afin d'entreposer les bagages. De plus un tel module de soute présente des dimensions réduites et n'est ni dimensionné, ni dimensionnable pour un plancher de cabine.

### PRESENTATION GENERALE DE L'INVENTION

A cet effet, l'invention concerne un plancher de cabine adapté pour être monté horizontalement dans un tronçon de fuselage périphérique d'aéronef, ledit plancher de cabine comprenant une première partie structurale plane et une deuxième partie structurale plane, chaque partie comprenant une extrémité de liaison et une extrémité de fixation, les extrémités de fixation sont adaptées pour être fixées audit tronçon de fuselage.

Le plancher de cabine est remarquable en ce que les extrémités de liaison de ladite première partie et de ladite deuxième partie sont articulées ensemble de manière à pouvoir évoluer entre un état plié, dans lequel les deux parties ne sont pas alignées et un état déplié dans lequel les deux parties sont alignées.

Le plancher de cabine selon l'invention comprend ainsi deux parties adaptées pour être mises en rotation l'une par rapport à l'autre. Aussi, un tel plancher de cabine peut avantageusement se présenter sous une forme pliée, permettant un gain de place lors du stockage, du transport ou du montage, ou sous une forme dépliée, permettant son utilisation dans un tronçon de fuselage d'un avion.

Un tel plancher de cabine est de manière avantageuse préassemblé sur un site dédié permettant un gain de temps sur la ligne d'assemblage finale de l'avion. Le préassemblage du plancher de cabine selon l'invention sur un site dédié permet d'améliorer la logistique, puisqu'il permet d'assembler une pluralité de planchers de cabine en avance de phase et de les stocker sur un tel site. Ainsi lorsqu'il est nécessaire de monter un plancher de cabine dans un avion, le plancher de cabine est prêt à être transporté et monté dans le tronçon de fuselage. Un tel préassemblage permet ainsi avantageusement un gain de temps conséquent.

De plus l'assemblage du plancher de cabine sur un site dédié permet de limiter les risques d'erreurs ou d'endommagements, puisqu'il est réalisé sans contraintes liées à l'avion et par une main d'oeuvre dédiée à cette tâche, ce qui permet également de limiter les coûts.

De préférence la première partie et la deuxième partie du plancher de cabine sont symétriques. Une telle symétrie permet une meilleure répartition des efforts mécaniques dans la structure. Ainsi les masses supportées par le plancher sont équitablement réparties. La symétrie des deux parties permet également de les concevoir à l'identique, les rendant de manière avantageuse interchangeables.

De préférence, le plancher de cabine ne comprend qu'un unique axe d'articulation. Ainsi, cela limite le nombre de lignes de pliage et simplifie la fabrication et le montage. L'axe d'articulation s'étend de préférence de manière centrale. De préférence, la première partie est configurée pour s'incliner par rapport à la deuxième partie selon un angle de pliage inférieur à 90°, de préférence, inférieur à 45°, de préférence encore, inférieur à 5°. Ainsi, l'encombrement du plancher de cabine est fortement réduit.

Selon un aspect préféré, le plancher de cabine selon l'invention comprend une pluralité de modules d'articulation reliant les extrémités de liaison de ladite première partie et de ladite deuxième partie. Une pluralité de modules d'articulation permet de répartir les efforts en différentes zones, ce qui est avantageux. De manière préférée, chaque module d'articulation comprenant deux éléments, en particulier des chapes, reliés par une liaison pivot.

La liaison entre la première partie et la deuxième partie est ainsi renforcée par la pluralité de modules d'articulation, apportant également une meilleure flexibilité de la liaison. En outre, une telle liaison pivot permet avantageusement d'autoriser une rotation autour d'un unique angle de pliage. Le plancher de cabine selon l'invention peut ainsi de manière avantageuse se replier entièrement de manière à ce que la première partie repose sur la deuxième partie, permettant également de limiter l'encombrement lors du stockage ou du transport d'un tel plancher.

De manière préférée, la première partie et la deuxième partie du plancher de cabine comprennent chacune un assemblage de poutres longitudinales et de poutres latérales. Un tel assemblage permet de renforcer la structure du plancher de cabine de manière à le rendre solide tout en restant léger. Le plancher de cabine selon l'invention comprend ainsi deux parties structurales planes.

De préférence, les modules d'articulation sont reliés aux poutres latérales des deux parties, permettant de renforcer la liaison entre la première partie et la deuxième partie. De préférence, chaque poutre latérale est associée à un module d'articulation. De tels modules d'articulation sont avantageusement fixés à chacune des poutres latérales, en particulier par rivetage, permettant de solidariser les modules d'articulation au plancher de cabine.

De préférence, les modules d'articulation s'étendent à la surface inférieure du plancher de cabine de manière à ne pas encombrer la surface supérieure du plancher de cabine sur laquelle est monté du mobilier.

De manière préférée, le plancher de cabine comporte des moyens de verrouillage, de préférence des éclisses, adaptés pour verrouiller le plancher de cabine à l'état déplié. Ainsi, la résistance mécanique du plancher au niveau de son axe d'articulation est améliorée. Le plancher de cabine selon l'invention possède alors une résistance mécanique analogue à celle d'un plancher selon l'art antérieur.

Selon un aspect préféré, la première partie et la deuxième partie du plancher de cabine comprenant chacune un assemblage de poutres longitudinales et de poutres latérales, les moyens de verrouillage sont solidarisés aux poutres latérales. De manière avantageuse, les moyens de verrouillage sont placés au niveau de l'axe d'articulation à proximité des modules d'articulation pour bloquer toute rotation. Le verrouillage d'un plancher de cabine à l'état déplié est simple à réaliser étant donné qu'il est réalisé au centre du plancher, c'est à dire, à un lieu où les contraintes géométriques sont faibles.

De tels moyens de verrouillage permettent également, de manière avantageuse, de prérégler la position latérale (selon l'axe Y) du plancher de cabine en vue de sa fixation au fuselage.

L'invention concerne également un aéronef comprenant au moins un tronçon de fuselage de forme périphérique et au moins un plancher de cabine selon l'invention, les extrémités de fixation du plancher de cabine à l'état déplié étant solidarisées au tronçon de fuselage, de préférence, à une hauteur médiane.

L'invention concerne en outre un procédé de montage d'un plancher de cabine selon l'invention dans un tronçon de fuselage de forme périphérique d'un avion, le procédé comprenant : une étape d'introduction dudit plancher de cabine, à l'état plié, dans le tronçon de fuselage jusqu'à sa position de montage, une étape d'articulation des parties du plancher de cabine afin que le plancher de cabine soit dans un état déplié, et une étape de fixation des extrémités de fixation du plancher de cabine au tronçon de fuselage.

Un tel procédé est avantageux étant donné qu'il limite la main d'oeuvre nécessaire au montage d'un tel plancher de cabine dans un avion. En effet le plancher préassemblé sur un site dédié est ainsi prêt à être monté dans l'avion. Un tel procédé permet ainsi également de réduire les temps de montage du plancher de cabine dans l'avion sur la ligne d'assemblage.

De plus, un tel procédé de montage limite les coûts puisque l'outillage utilisé pour la manutention est moins conséquent du fait des dimensions réduites du plancher de cabine à l'état plié. Un tel outillage nécessite également moins de main d'oeuvre.

De manière avantageuse, le procédé de montage comprend postérieurement à l'étape d'articulation des parties du plancher de cabine, une étape de verrouillage du plancher à l'état déplié. De préférence, la première partie et la deuxième partie du plancher de cabine sont verrouillées ensemble, en particulier, au moyen d'une ou plusieurs éclisses. Ainsi, la résistance mécanique du plancher au niveau de son axe d'articulation est améliorée. L'étape de verrouillage permet au plancher de cabine de posséder une résistance mécanique analogue à celle d'un plancher selon l'art antérieur.

Un tel organe de verrouillage permet également avantageusement de rattraper d'éventuels jeux entre les pièces dus au positionnement du plancher de cabine à l'état déplié au moment du montage final. Cependant, il va de soi que le verrouillage entre la première partie et la deuxième partie du plancher de cabine peut être réalisée de manière automatique, par exemple par emboitement.

L'invention concerne en outre un système de fixation pour plancher de cabine, ledit système de fixation comprenant une pluralité de pièces, adaptées pour relier ledit plancher de cabine à un tronçon de fuselage d'aéronef, ledit système de fixation comportant au moins une vis principale, un premier insert destiné à être monté dans le tronçon de fuselage, une entretoise de cisaillement adaptée pour s'étendre à l'interface entre le plancher et le tronçon de fuselage, un deuxième insert destiné à être monté dans le plancher de cabine et un écrou de serrage adapté pour former une liaison boulonnée avec ladite vis principale.

Un tel système de fixation permet d'optimiser la fixation du plancher de cabine sur la ligne d'assemblage de l'avion en limitant les tâches à réaliser ainsi que la main d'oeuvre nécessaire. En effet, les différentes pièces du système de fixation permettent de compenser les jeux entre le plancher de cabine et le fuselage lors du montage tout en limitant le nombre de pièces.

De manière avantageuse, les inserts permettent la reprise des efforts mécaniques dans le cadre du fuselage et dans la poutre latérale du plancher de cabine. L'entretoise permet d'obtenir une liaison rigide afin de reprendre et transmettre les efforts de cisaillement. Enfin, l'association de la vis et de l'écrou de serrage permet de maintenir l'ensemble par boulonnage.

L'invention concerne également un ensemble d'un plancher monté dans un tronçon de fuselage au moyen d'au moins un système de fixation. De préférence, le tronçon de fuselage comprend au moins un cadre pré-percé et le plancher de cabine comporte au moins une poutre latérale pré-percée pour la mise en place du système de fixation entre le cadre et la poutre latérale.

La pluralité de pièces utilisées pour le système de fixation selon l'invention s'adapte, de manière avantageuse, pour solidariser les pré-perçages tout en compensant les jeux de positionnement du plancher de cabine par rapport au tronçon de fuselage. De manière avantageuse, les pré-perçages possèdent un diamètre supérieur au diamètre classique de manière à faciliter la mise en relation du plancher de cabine avec le fuselage, le système de fixation permettant de rattraper les jeux de positionnement. En effet, il suffit à un opérateur de sélectionner chaque pièce du système de fixation de manière individuelle parmi un ensemble de pièces de caractéristiques différentes (longueur, diamètre, asymétrie, excentrique, etc.) afin de former une fixation personnalisée pour éliminer les jeux de positionnement. Autrement dit, le positionnement des extrémités de fixation du plancher pliant peut être approximatif, les systèmes de fixation permettant de compenser les jeux de positionnement afin de réaliser un montage optimal et sécurisé.

Enfin, un tel système de fixation permet d'éviter des opérations de perçage sur la ligne d'assemblage de l'avion permettant un gain de temps et une réduction de la main d'oeuvre, donc des coûts d'installation. Le risque d'endommagement est par ailleurs limité.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un avion,
- la figure 2 est une représentation schématique en coupe d'un avion et de ses planchers,
- la figure 3 est une représentation schématique d'un tronçon de fuselage modulaire d'un avion,
- la figure 4 est une représentation schématique d'un plancher selon une forme de réalisation selon l'invention,
- les figures 5, 6 et 7 sont des représentations schématiques du dépliage du plancher de cabine de la figure 4,
- les figures 8 et 9 sont des représentations schématiques rapprochées d'un module d'articulation du plancher de cabine de la figure 4 lors de son dépliage,
- la figure 10 est une représentation schématique d'une étape de montage du plancher de la figure 4 dans un avion, et
- les figures 11 et 12 sont des représentations schématiques d'une étape de fixation du plancher de la figure 4 au moyen d'un système de fixation.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

Il va être présenté une forme de réalisation d'un plancher de cabine 2 selon l'invention destiné à être monté dans un avion 1, ainsi qu'un procédé de montage d'un tel plancher de cabine 2.

Pour rappel, en référence à la figure 1, un avion 1 s'étend longitudinalement selon un axe X, latéralement selon un axe Y et verticalement selon un axe Z de manière à former un repère orthogonal (X, Y, Z). Ainsi par le terme horizontal, on entend un objet s'étendant dans le plan (X, Y). De manière similaire, le terme vertical désigne un objet s'étendant dans le plan (X, Z). De manière connue, un avion 1, comprend un fuselage 10 périphérique, s'étendant selon l'axe X et dont la section est de forme typiquement circulaire ou elliptique. Un tel fuselage 10 délimite l'habitacle de l'avion 1. Un avion 1 est communément divisé en une pluralité de tronçons 15, comme par exemple le tronçon central, dans lequel sont installés les passagers.

Selon l'invention, le plancher de cabine 2 est pliant de manière à simplifier aussi bien sa fabrication que son montage dans l'avion 1.

En référence à la figure 4, le plancher de cabine 2 est adapté pour être monté horizontalement dans un tronçon 15 de fuselage 10, ledit plancher de cabine 2 comprenant une première partie structurale plane 21 et une deuxième partie structurale plane 22, chaque partie 21, 22 comprenant une extrémité de liaison 23 et une extrémité de fixation 24, les extrémités de fixation 24 étant adaptées pour être fixées audit tronçon 15 de fuselage 10. Selon l'invention, les extrémités de liaison 23 de ladite première partie 21 et de ladite deuxième partie 22 sont articulées ensemble de manière à pouvoir évoluer entre un état plié, dans lequel les deux parties ne sont pas alignées et un état déplié dans lequel les deux parties sont alignées.

Toujours en référence à la figure 4, chaque partie 21, 22 du plancher de cabine 2, comprend un assemblage de poutres longitudinales 25, s'étendant selon l'axe X en position finale, et de poutres latérales 26, s'étendant selon l'axe Y en position finale. De préférence, un tel assemblage est réalisé dans un matériau composite ou métallique comme de l'aluminium. De préférence, les poutres longitudinales 25 et les poutres latérales 26 sont reliées entre elles par rivetage mais il va de soi que tout autre moyen d'assemblage pourrait convenir (vissage, emboitement, collage, etc.).

Selon l'invention, chaque partie 21, 22 est structurale et plane. Autrement dit, chaque partie 21, 22 se présente sous la forme d'un demi plancher de cabine classique. Chaque partie 21, 22 peut être préassemblée sur un site dédié, permettant un assemblage du plancher de cabine 2 en avance de phase, ce qui présente de nombreux avantages sur le plan logistique. En effet un tel assemblage, en dehors de la ligne d'assemblage finale de l'avion 1, permet avantageusement de faciliter le stockage et l'approvisionnement. De plus, l'assemblage des poutres longitudinales 25 et des poutres latérales 26 est réalisé sans contraintes liées à l'avion, ce qui limite les risques d'erreurs et d'endommagements. Il va de soi que les parties 21, 22 pourraient également être assemblées de manière automatisée.

Selon une forme de réalisation préférée, la première partie 21 et la deuxième partie 22 sont symétriques, permettant une meilleure répartition des efforts mécaniques dans les poutres longitudinales 25 et latérales 26, une fois le plancher de cabine 2 fixé dans l'avion 1. Une telle symétrie permet également de faciliter l'assemblage et la logistique du site dédié au pré-assemblage.

Comme indiqué précédemment, chaque partie 21, 22 comprend une extrémité de liaison 23 et une extrémité de fixation 24, adaptée pour coopérer avec le fuselage 10 de l'avion 1, les extrémités de liaison 23 de la première partie 21 et de la deuxième partie 22 étant adaptées pour coopérer ensemble. Dans cet exemple, chaque partie 21, 22 comporte une pluralité d'extrémités de liaison 23 et d'extrémité de fixation 24. En référence à la figure 4, les extrémités de liaison 23 sont formées par les extrémités intérieures des poutres latérales 26 tandis que les extrémités de fixation 24 sont formées par les extrémités extérieures des poutres latérales 26.

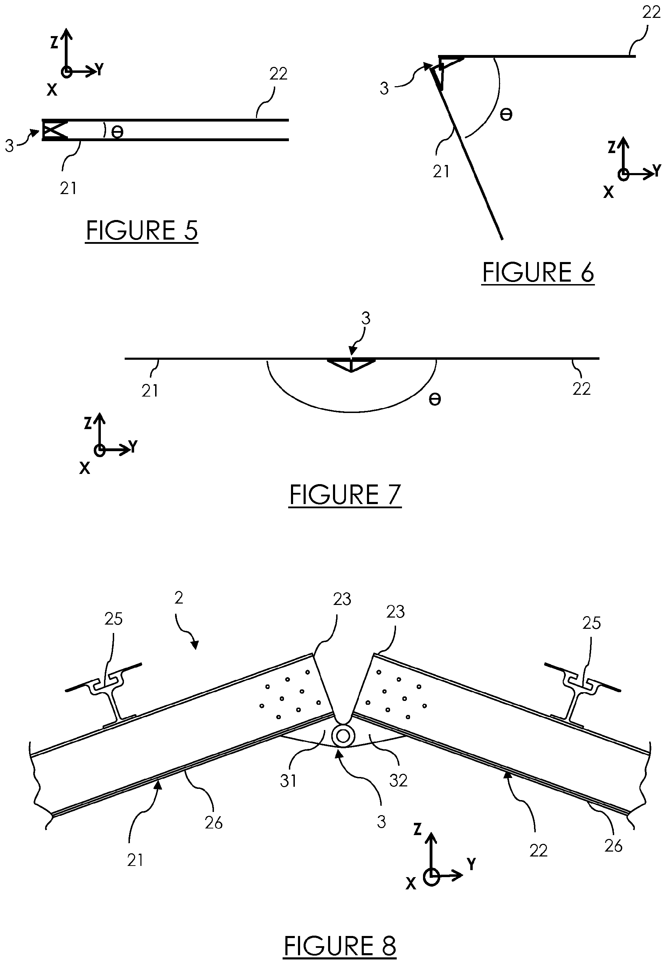

Les extrémités de liaison 23 de la première partie 21 et de la deuxième partie 22 sont articulées ensemble de manière à pouvoir évoluer entre un état plié et un état déplié. Dans cet exemple, en référence à la figure 4, le plancher de cabine 2 comporte une pluralité de modules d'articulation 3 de manière à articuler la première partie 21 par rapport à la deuxième partie 22 selon un angle de pliage θ illustré aux figures 5 à 7. Dans cet exemple, les modules d'articulation 3 sont reliés aux extrémités de liaison 23, c'est à dire, aux extrémités intérieures des poutres latérales 26. Dans cet exemple, l'angle de pliage θ varie entre 0° (Figure 5) et 180° (Figure 7).

La figure 5 représente un plancher de cabine 2 selon une forme préférée de l'invention intégralement plié sur lui-même, autrement dit la première partie 21 repose sur la deuxième partie 22. L'angle de pliage θ est alors de 0°. Un tel plancher de cabine 2 intégralement plié peut ainsi aisément être entreposé puisque son encombrement latéral est réduit de moitié. Un tel plancher de cabine 2 intégralement plié sur lui-même peut également aisément être transporté sur la ligne d'assemblage de l'avion 1 du fait de son faible encombrement. La figure 6 représente le plancher de cabine 2 en cours de dépliage et la figure 7 présente un plancher de cabine 2 déplié, l'angle de pliage θ est alors de 180°.

Par le terme «déplié», on entend un plancher de cabine 2, dans lequel l'angle de pliage θ est égal à 180°. On parlera ainsi d'un plancher de cabine 2 à l'horizontal dans lequel la première partie 21 et la deuxième partie 22 sont alignées. De même par le terme « plié », on entend un plancher de cabine 2, dans lequel l'angle de pliage θ est strictement différent de 180°. On parlera dans ce cas d'un plancher de cabine 2 dans lequel la première partie 21 structurale plane et la deuxième partie 22 structurale plane ne sont pas alignées.

Dans cet exemple, en référence à la figure 4, chaque poutre latérale 26 est reliée à un module d'articulation 3 de manière à renforcer la solidité d'un tel plancher de cabine 2 en apportant une forte résistance aux efforts mécaniques. De tels modules d'articulation 3 sont disposés sur la surface inférieure du plancher, de manière à permettre l'articulation du plancher de cabine 2 tout en conservant une surface supérieure plane lorsque le plancher de cabine 2 est à l'état déplié.

En référence à la figure 8, chaque module d'articulation 3 comprend une première chape 31 et une deuxième chape 32 ayant un axe de rotation commun. Il va de soi que chaque module d'articulation 3 pourrait posséder une forme différente. De préférence, chaque module d'articulation 3 est métallique.

Comme illustré à la figure 8, la première chape 31 du module d'articulation 3 est fixée à la première partie 21 du plancher de cabine 2 tandis que la deuxième chape 32 est fixée à la deuxième partie 22 du plancher de cabine 2, par exemple par l'intermédiaire de rivets ou de vis. De telles chapes 31, 32 coopèrent ensemble afin de permettre une articulation selon un axe de rotation. En référence à la figure 4, les modules d'articulation 3 sont alignés selon un même axe longitudinal de manière à permettre une rotation autour dudit axe. Une telle liaison, désignée liaison pivot, est une liaison mécanique n'autorisant aucun autre déplacement ou rotation que l'axe en commun. En référence à la figure 8, l'axe de rotation des chapes 31, 32 du module d'articulation 3 selon l'invention correspond à une rotation autour de l'axe X. Un tel module d'articulation 3 présente l'avantage de permettre une grande amplitude de rotation des parties 21, 22 du plancher de cabine 2 comme cela a été présenté précédemment.

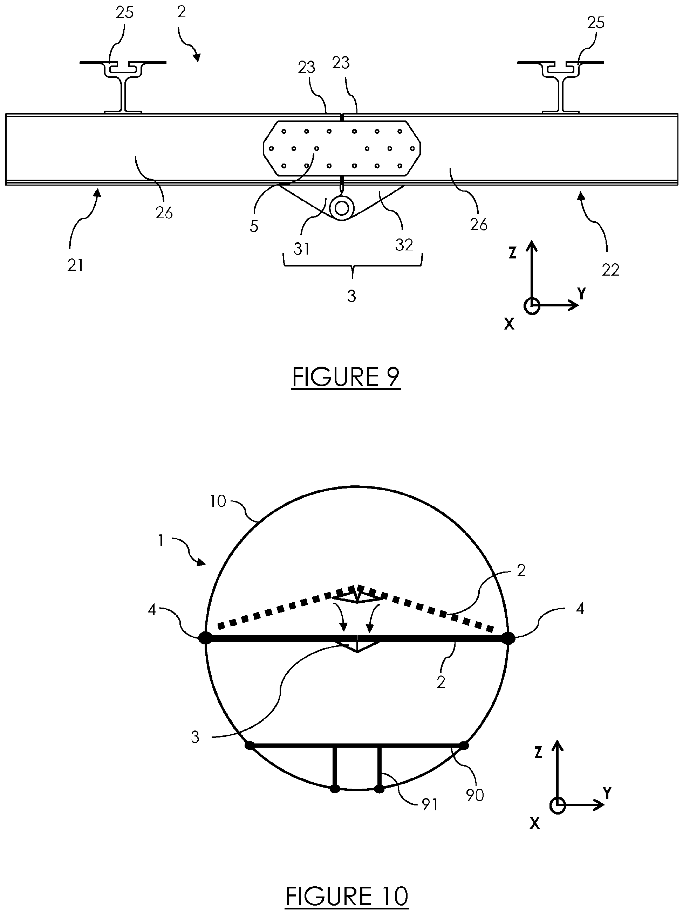

De manière préférée, le plancher de cabine 2 comporte des moyens de verrouillage du plancher de cabine 2 à l'état déplié de manière à interdire toute rotation relative entre la première partie 21 et la deuxième partie 22. Dans cet exemple, les moyens de verrouillage se présentent sous la forme d'une pluralité d'éclisses 5, de préférence métallique, solidarisée aux deux parties 21, 22. De manière préférée, en référence à la figure 9, une éclisse 5, est fixée entre deux extrémités de liaison 23 des parties 21, 22, de préférence, latéralement. Autrement dit, les éclisses 5 sont fixées aux extrémités intérieures des poutres latérales 26.

Un tel organe de verrouillage 5 permet avantageusement d'assurer la continuité structurale et le verrouillage du plancher de cabine 2. De plus l'organe de verrouillage 5 ainsi positionnée, permet également de rattraper d'éventuels jeux entre les pièces au moment du montage final, comme cela sera présenté par la suite.

Comme indiqué précédemment, chaque partie 21, 22 comprend une extrémité de fixation 24 adaptée pour être fixée audit tronçon 15 de fuselage 10, de préférence, à une hauteur médiane. De manière préférée, en référence à la figure 10, le plancher de cabine 2 comprend des systèmes de fixation 4 adaptés pour solidariser chaque extrémité de fixation 24 au tronçon 15 de fuselage 10.

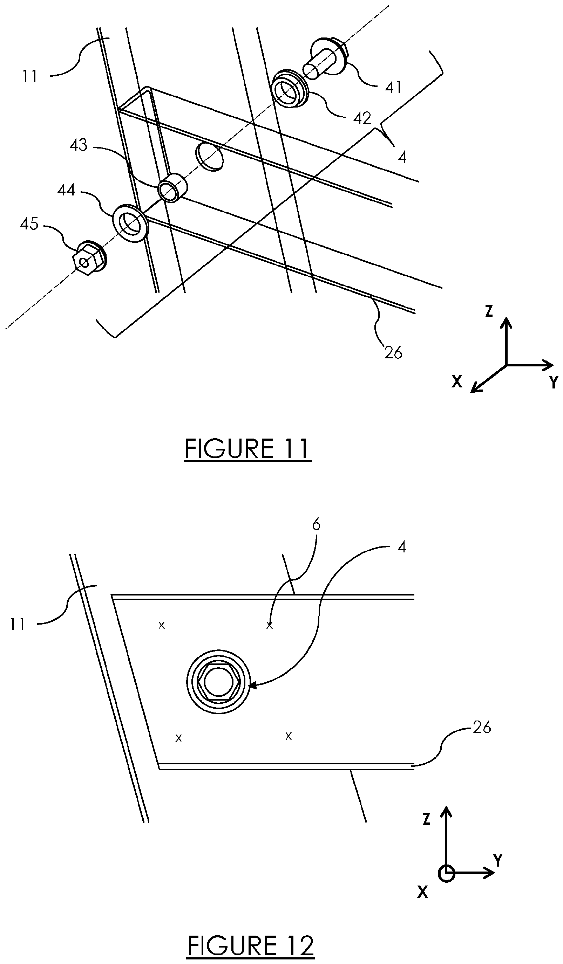

Dans cet exemple, en référence aux figures 11 et 12, chaque extrémité de fixation 24 (extrémité extérieure de poutre latérale 26) est positionnée dos à dos à un cadre 11 du fuselage10. Une telle technique d'assemblage minimise avantageusement le nombre de pièces de la liaison.

Dans cet exemple, chaque système de fixation 4 comprend un premier insert 42 positionné dans le cadre 11 du fuselage 10 et un deuxième insert 44 positionné dans la poutre latérale 26 du plancher de cabine 2. De tels inserts 42, 44 permettent la reprise des efforts mécaniques respectivement dans le cadre 11 et la poutre latérale 26. Le système de liaison 4 comprend en outre une entretoise de cisaillement 43, placée à l'interface entre le premier insert 42 et le deuxième insert 44 afin de permettre une liaison rigide pour reprendre et transmettre les efforts de cisaillement. Une telle entretoise 43 permet avantageusement de maintenir un écartement constant entre le cadre 11 et la poutre latérale 26. Le système de fixation 4 comprend en outre une vis principale 41 et un écrou de serrage 45 afin de boulonner la poutre latérale 26 au cadre 11 du fuselage 10 de manière sécurisée.

Ainsi, le système de fixation 4 comporte une pluralité de pièces, ce qui permet de réaliser une fixation adaptative en fonction des contraintes de montage (écart latéral, écart longitudinal, écart vertical, etc.). En effet, chaque pièce peut être choisie de manière indépendante en fonction de ses caractéristiques propres (entraxe, longueur, diamètre, etc.) pour compenser tout jeu de positionnement.

Une telle fixation permet également de s'affranchir d'un positionnement trop précis de la position latérale, selon l'axe Y, du plancher de cabine par rapport aux cadres du fuselage 11 lors du montage.

Outre le système de fixation 4, la liaison entre chaque extrémité de fixation 24 (extrémité extérieure de poutre latérale 26) et un cadre 11 du fuselage 10, peut comprendre, de manière optionnelle, une ou plusieurs fixations supplémentaires 6 comme illustré à la figure 12. De telles fixations supplémentaires 6, par exemple un assemblage boulonné, permettent ainsi de compléter la fixation du plancher de cabine 2 aux cadres 11 du fuselage 10. La figure 12 présente un exemple de quatre fixations supplémentaires 6, mais il va de soi que le nombre de fixations supplémentaires 6 pourrait être différent.

Il va dorénavant être présenté un procédé de montage du plancher de cabine 2 dans un avion 1 comprenant un tronçon 15 de fuselage 10 périphérique fermé dit « Full Barrel », dans lequel est pré-monté un plancher de soute 90 comprenant un renfort vertical 91.

Comme indiqué précédemment, le plancher de cabine 2 est préassemblé sur un site dédié. De préférence, il est ensuite livré à l'état plié (angle de pliage θ égal à 0°) afin de limiter son encombrement et donc les coûts de transport et de manutention.

De manière préférée, les extrémités de fixation 24 du plancher de cabine 2 sont préalablement percées de manière à anticiper la fixation avec les cadres 11 du fuselage 10 et éviter tout endommagement du tronçon 15 de fuselage 10. Les perçages possèdent une section élargie par rapport à un perçage classique de manière à former un jeu de positionnement qui facilite la mise en correspondance des perçages.

Le plancher de cabine 2, à l'état plié, est ensuite introduit dans le tronçon 15 de fuselage 10 jusqu'à sa position de montage, autrement dit jusqu'à la position voulue selon l'axe X. Comme représenté à la figure 10, le plancher de cabine 2 est ensuite déplié progressivement de manière à ce que l'angle de pliage atteigne 180°.

Des éclisses 5 sont alors mises en place aux extrémités intérieures des poutres latérales 26 de manière à verrouiller la position dépliée du plancher de cabine 2. La position latérale, c'est-à-dire selon l'axe Y, du plancher de cabine 2 est préréglée avant la fixation des éclisses 5, en particulier, par rivetage.

L'extrémité extérieure de chaque poutre latérale 26 est ensuite fixée à un cadre 11 du fuselage 10 par un système de fixation 4. L'opérateur dispose d'une pluralité de pièces de caractéristiques différentes afin de former un système de fixation qui répond au jeu de positionnement entre les perçages du cadre 11 et de la poutre latérale 26.

Une telle adaptation du système de fixation 4 permet le rattrapage des jeux de positionnement tout en s'affranchissant d'une nouvelle opération de perçage, ce qui évite tout endommagement.

Grâce à l'invention, il n'est plus nécessaire de percer une nouvelle fois la poutre latérale 26 ou le cadre 11 du fuselage 10 sur la ligne d'assemblage final de l'avion 1, générant une perte de temps ainsi que des coûts supplémentaires.

Un plancher de cabine 2 tel que décrit dans l'invention permet un gain de temps du fait de son pré-assemblage sur un site dédié, permettant également un gain de place lors du stockage d'un tel plancher 2. Un tel plancher permet également un gain de temps lors de l'assemblage final de l'avion puisque le plancher de cabine préassemblé est prêt à être monté dans le fuselage. Seule une phase de positionnement et de fixation est nécessaire à l'intérieur du fuselage, ce qui simplifie en outre l'intégration d'un tel plancher de cabine 2.

## Revendications

1. Plancher de cabine (2) adapté pour être monté horizontalement dans un tronçon (15) de fuselage (10) périphérique d'aéronef (1), ledit plancher de cabine (2) comprenant une première partie structurale plane (21) et une deuxième partie structurale plane (22), chaque partie (21, 22) comprenant une extrémité de liaison (23) et une extrémité de fixation (24), les extrémités de fixation (24) étant adaptées pour être fixées audit tronçon (15) de fuselage (10), plancher de cabine (2) **caractérisé en ce que** les extrémités de liaison (23) de ladite première partie (21) et de ladite deuxième partie (22) sont articulées ensemble de manière à pouvoir évoluer entre un état plié, dans lequel les deux parties (21, 22) ne sont pas alignées et un état déplié dans lequel les deux parties (21, 22) sont alignées.

2. Plancher de cabine (2) selon la revendication 1, dans lequel la première partie (21) et la deuxième partie (22) sont symétriques.

3. Plancher de cabine (2) selon l'une des revendications 1 à 2 comprenant un unique axe d'articulation.

4. Plancher de cabine (2) selon l'une des revendications 1 à 3, comprenant une pluralité de modules d'articulation (3) reliant les extrémités de liaison (23) de ladite première partie (21) et de ladite deuxième partie (22).

5. Plancher de cabine (2) selon la revendication 4, dans lequel, la première partie (21) et la deuxième partie (22) comprenant chacune un assemblage de poutres longitudinales (25) et de poutres latérales (26), les modules d'articulation (3) sont reliés aux poutres latérales (26) des parties (21, 22).

6. Plancher de cabine (2) selon l'une des revendications 1 à 5, dans lequel les modules d'articulation (3) s'étendent à la surface inférieure du plancher de cabine (2).

7. Plancher de cabine (2) selon l'une des revendications 1 à 6, comprenant des moyens de verrouillage, de préférence des éclisses (5), adaptés pour verrouiller le plancher de cabine (2) à l'état déplié.

8. Plancher de cabine (2) selon la revendication 7, dans lequel, la première partie (21) et la deuxième partie (22) comprenant chacune un assemblage de poutres longitudinales (25) et de poutres latérales (26), les moyens de verrouillage sont solidarisés aux poutres latérales (26).

9. Aéronef (1) comprenant au moins un tronçon (15) de fuselage (10) de forme périphérique et au moins un plancher de cabine (2) selon l'une des revendications 1 à 8 les extrémités de fixation (24) du plancher de cabine (2) à l'état déplié étant solidarisées au tronçon (15) de fuselage (10), de préférence, à une hauteur médiane.

10. Procédé de montage d'un plancher de cabine (2) selon l'une des revendications 1 à 8 dans un tronçon (15) de fuselage (10) de forme périphérique d'un aéronef, le procédé comprenant :
- une étape d'introduction dudit plancher de cabine (2), à l'état plié, dans le tronçon (15) de fuselage (10) jusqu'à sa position de montage,
- une étape d'articulation des parties (21, 22) du plancher de cabine (2) afin que le plancher de cabine (2) soit dans un état déplié, et
- une étape de fixation des extrémités de fixation (24) du plancher de cabine (2) au tronçon (15) de fuselage (10).

## Patentansprüche

1. Kabinenboden (2), der für eine horizontale Montage in einem peripheren Segment (15) eines Rumpfs (10) eines Fluggeräts (1) geeignet ist, wobei der Kabinenboden (2) einen ersten ebenen Strukturteil (21) und einen zweiten ebenen Strukturteil (22) umfasst, wobei jeder Teil (21, 22) ein Verbindungsende (23) und ein Befestigungsende (24) umfasst, wobei die Befestigungsenden (24) für eine Befestigung an dem Segment (15) eines Rumpfs (10) geeignet sind, wobei der Kabinenboden (2) **dadurch gekennzeichnet ist, dass** die Verbindungsenden (23) des ersten Teils (21) und des zweiten Teils (22) gemeinsam derart angelenkt sind, dass sie sich zwischen einem gefalteten Zustand, in welchem die zwei Teile (21, 22) nicht fluchten, und einem entfalteten Zustand, in welchem die zwei Teile (21, 22) fluchten, entwickeln können.

2. Kabinenboden (2) nach Anspruch 1, wobei der erste Teil (21) und der zweite Teil (22) symmetrisch sind.

3. Kabinenboden (2) nach einem der Ansprüche 1 bis 2, umfassend eine einzige Gelenkachse.

4. Kabinenboden (2) nach einem der Ansprüche 1 bis 3, umfassend eine Vielzahl von Gelenkmodulen (3), welche die Verbindungsenden (23) des ersten Teils (21) und des zweiten Teils (22) verbinden.

5. Kabinenboden (2) nach Anspruch 4, wobei, da der erste Teil (21) und der zweite Teil (22) jeweils eine Anordnung von Längsträgern (25) und von Seitenträgern (26) umfassen, die Gelenkmodule (3) mit den Seitenträgern (26) der Teile (21, 22) verbunden sind.

6. Kabinenboden (2) nach einem der Ansprüche 1 bis 5, wobei sich die Gelenkmodule (3) auf der unteren Fläche des Kabinenbodens (2) erstrecken.

7. Kabinenboden (2) nach einem der Ansprüche 1 bis 6, umfassend Verriegelungsmittel, vorzugsweise Laschen (5), welche zur Verriegelung des Kabinenbodens (2) im entfalteten Zustand geeignet sind.

8. Kabinenboden (2) nach Anspruch 7, wobei, da der erste Teil (21) und der zweite Teil (22) jeweils eine Anordnung von Längsträgern (25) und von Seitenträgern (26) umfassen, die Verriegelungsmittel mit den Seitenträgern (26) fest verbunden sind.

9. Fluggerät (1), umfassend mindestens ein Segment (15) eines Rumpfs (10) peripherer Form und mindestens einen Kabinenboden (2) nach einem der Ansprüche 1 bis 8, wobei die Befestigungsenden (24) des Kabinenbodens (2) in entfaltetem Zustand mit dem Segment (15) eines Rumpfs (10) vorzugsweise in einer mittleren Höhe fest verbunden sind.

10. Verfahren zur Montage eines Kabinenbodens (2) nach einem der Ansprüche 1 bis 8 in einem Segment (15) eines Rumpfs (10) peripherer Form eines Fluggeräts, wobei das Verfahren umfasst:
- einen Schritt des Einführens des Kabinenbodens (2) im gefalteten Zustand in das Segment (15) eines Rumpfs (10) bis zu seiner Montageposition,
- einen Schritt des Anlenkens der Teile (21, 22) des Kabinenbodens (2), damit der Kabinenboden (2) in einem entfalteten Zustand ist, und
- einen Schritt des Befestigens der Befestigungsenden (24) des Kabinenbodens (2) am Segment (15) eines Rumpfs (10).

## Claims

1. Cabin floor (2) adapted for being mounted horizontally in a section (15) of peripheral fuselage (10) of an aircraft (1), said cabin floor (2) comprising a first flat structural part (21) and a second flat structural part (22), each part (21, 22) comprising a connecting end (23) and an attachment end (24), the attachment end (24) being adapted to be attached to said section (15) of fuselage (10), cabin floor (2) **characterised in that** the connecting ends (23) of said first part (21) and said second part (22) are hinged together so as to be able to develop between a folded state, wherein the two parts (21, 22) are not aligned and an unfolded state wherein the two parts (21, 22) are aligned.

2. Cabin floor (2) according to claim 1, wherein the first part (21) and the second part (22) are symmetrical.

3. Cabin floor (2) according to one of claims 1 to 2 comprising one single hinge axis.

4. Cabin floor (2) according to one of claims 1 to 3, comprising a plurality of hinge modules (3) connecting the connecting ends (23) of said first part (21) and of said second part (22).

5. Cabin floor (2) according to claim 4, wherein the first part (21) and the second part (22), each comprising an assembly of longitudinal beams (25) and lateral beams (26), the hinge modules (3) are connected to the lateral beams (26) of the parts (21, 22).

6. Cabin floor (2) according to one of claims 1 to 5, wherein the hinge modules (3) extend to the lower surface of the cabin floor (2).

7. Cabin floor (2) according to one of claims 1 to 6, comprising locking means, preferably bolts (5), adapted to lock the cabin floor (2) in the unfolded state.

8. Cabin floor (2) according to claim 7, wherein the first part (21) and the second part (22) each comprising an assembly of longitudinal beams (25) and lateral beams (26), the locking means are secured to the lateral beams (26).

9. Aircraft (1) comprising at least one section (15) of fuselage (10) of peripheral shape and at least one cabin floor (2) according to one of claims 1 to 8, the attachment ends (24) of the cabin floor (2) in the unfolded state being secured to the section (15) of fuselage (10), preferably at a median height.

10. Method for mounting a cabin floor (2) according to one of claims 1 to 8 in a section (15) of fuselage (10) of peripheral shape of an aircraft, the method comprising:
- a step of inserting said cabin floor (2), in the folded state, in the section (15) of fuselage (10) to the mounting position thereof,
- a step of hinging the parts (21, 22) of the cabin floor (2) such that the cabin floor (2) is in an unfolded state, and
- a step of attaching the attachment ends (24) of the cabin floor (2) to the section (15) of fuselage (10).
